# EUROPÄISCHE PATENTSCHRIFT

(11) **EP 4 399 084 B1**
(45) Veröffentlichungstag und Bekanntmachung des Hinweises auf die Patenterteilung: **12.11.2025**
(21) Anmeldenummer: 22741479.4
(22) Anmeldetag: 30.06.2022
(51) Int. Cl.: B29C 51/42, B29C 51/00, B29L 31/00, B65B 3/02

(54) **VERFAHREN ZUR HERSTELLUNG VON WASCHMITTELDOSIEREINHEITEN MIT VERBESSERTEN EIGENSCHAFTEN**
METHOD FOR PRODUCING DETERGENT DOSING UNITS WITH IMPROVED PROPERTIES
PROCÉDÉ DE PRODUCTION D'UNITÉS DE DOSAGE DE DÉTERGENT PRÉSENTANT DES PROPRIÉTÉS AMÉLIORÉES

(30) Priorität: 08.09.2021 DE 102021209934
(43) Veröffentlichungstag der Anmeldung: 17.07.2024
(73) Patentinhaber: Henkel AG & Co. KGaA, 40589 Düsseldorf (DE)
(72) Erfinder: MATZEIT, Niklas, 50126 Bergheim (DE); SIEPLER, Niklas, 42327 Wuppertal (DE); TREBBE, Uwe, 40547 Düsseldorf (DE)
(86) Internationale Anmeldenummer: PCT/EP2022/068131
(87) Internationale Veröffentlichungsnummer: WO 2023/036487

(56) Entgegenhaltungen:
- EP-A1- 3 025 983
- EP-B1- 1 161 370
- WO-A1-2020/152044
- BE-A- 785 262
- DE-A1- 10 259 848
- DE-B1- 1 604 708

## Beschreibung

Die vorliegende Erfindung betrifft Wasch- oder Reinigungsmitteldosiereinheiten mit mindestens einer, von einem wasserlöslichen Filmmaterial gebildeten Aufnahmekammer, welche ihrerseits mit einem Wasch- oder Reinigungsmittel befüllt ist. Weiterhin betrifft die Anmeldung Verfahren zur Herstellung dieser Wasch- oder Reinigungsmitteldosiereinheiten.

An die Konfektions- und Angebotsformen von Wasch- und Reinigungsmittel werden sich kontinuierlich ändernde Anforderungen gestellt. Ein Hauptaugenmerk liegt dabei seit geraumer Zeit auf der bequemen Dosierung von Wasch- und Reinigungsmitteln durch den Verbraucher und der Vereinfachung der zur Durchführung eines Wasch- oder Reinigungsverfahren notwendigen Arbeitsschritte. Eine technische Lösung bieten vorportionierte Wasch- oder Reinigungsmittel, beispielsweise Folienbeutel mit einer oder mehreren Aufnahmekammern für feste oder flüssige Wasch- oder Reinigungsmittel.

Ein für die Herstellung dieser Folienbeutel relevanter Trend, ist die Miniaturisierung dieser Folienbeutel. Hintergrund dieser Entwicklung sind neben einer höheren Verbraucherakzeptanz aufgrund vereinfachter Handhabung insbesondere Nachhaltigkeitsaspekte, beispielsweise in Bezug auf die Menge der eingesetzten Verpackungsmittel.

Die Herstellung der zuvor beschriebenen Folienbeutel erfolgt durch mehrstufige Prozesse, in deren Verlauf wasserlösliche Folienmaterialien beispielsweise mittels durch Einwirkung von Wärme und Unterdruck in Kavitäten eingeformt, befüllt und nachfolgend versiegelt werden. Während die Erwärmung der Folien deren Plastizität erhöht, bewirkt die aus dem an die erwärmte Folie angelegten Unterdruck resultierende Kraft deren Streckung und plastische Verformung. Der Film wird in diesem Verfahren über seine Fläche nicht homogen gestreckt, vielmehr wechseln Bereiche hoher Streckung, beispielsweise im Randbereich der Kavität mit Bereichen geringerer Streckung ab. Aus einem Folienmaterial mit homogener Foliendicke entsteht so eine verformte Folie in Form eines Aufnahmebehälters mit einer heterogenen Foliendickenverteilung. Diese heterogenen Foliendickenverteilung wird umso ausgeprägter ausfallen, je stärker das ursprüngliche Folienmaterial verformt wird. Die Stärke der Verformung nimmt in der Regel beispielsweise mit der Anzahl der in den Aufnahmebehälter eingeformten Aufnahmekammern oder deren Tiefe zu.

Neben anderen Faktoren bestimmen sowohl die Foliendickenverteilung als auch die absolute Foliendicke die haptischen, optischen und mechanischen Eigenschaften des Folienbeutels. Folienbeutel mit großen Unterschieden in der Foliendicke werden häufig als weniger ansprechend wahrgenommen. Folienbeutel mit geringer minimalen Foliendicke verformen sich leichter unter ihrem Eigengewicht als entsprechende Folienbeutel mit höherer Foliendicke und wirken schlaff. Diese Folienbeutel halten mechanischer Belastung in geringerem Maße stand und lösen sich bei Wasserzutritt zu schnell. Die beiden letztgenannten Punkte sind für Folienbeutel nicht nur im Bereich von Herstellung, Transport und Lagerung relevant, sondern haben insbesondere Auswirkungen auf die Produktsicherheit, beispielsweise bei versehentlicher oraler Aufnahme.

In der internationalen Anmeldung WO 2020/152044 A1 wird ein Verfahren zur Herstellung wasserlöslicher Behälter beschrieben, in dessen Verlauf ein wasserlöslicher Film mittels einer zweiteiligen Heizvorrichtung mit heterogenem Temperaturprofil erwärmt und nachfolgend tiefgezogen wird.

In den Patentanmeldungen DE 102 59 848 A1, EP 3 025 983 A1 und DE 2 230 895 und den erteilten Patenten EP 1 161 370 B1 und US 3,484,518 werden Verfahren zur Umformung von Folien und zur Folienverpackung von Verbrauchsgütern beschrieben.

Vor diesem technischen Hintergrund lag der Anmeldung die Aufgabe zugrunde, Waschmittelportionseinheiten bereitzustellen, welche bei minimalem Einsatz zur Verpackung eingesetzter Filmmaterialien über eine maximale Stabilität sowie eine ansprechende Optik und Haptik verfügen. Die Waschmittelportionseinheiten sollten zudem in effizienter Weise auch großtechnisch herstellbar sein.

Ein erster Anmeldungsgegenstand ist ein
Verfahren zur Herstellung einer Waschmittelportionseinheit mit mindestens einer von einem wasserlöslichen Film umgebenden befüllten Aufnahmekammer, umfassend die Schritte
a) Transport eines ersten wasserlöslichen Films in Richtung einer Heizvorrichtung;
b) In Kontakt bringen des ersten wasserlöslichen Films mit der Heizvorrichtung;
c) Erwärmen des ersten wasserlöslichen Films mittels der Heizvorrichtung;
d) Aufheben des Kontakts zwischen dem ersten wasserlöslichen Film und der Heizvorrichtung;
e) Einformen des ersten erwärmten wasserlöslichen Films in die Kavitäten einer unterhalb des ersten wasserlöslichen Films befindlichen Tiefziehmatrize unter Ausbildung eines Aufnahmebehälters mit mindestens einer Aufnahmekammer;
f) Befüllen der mindestens einen Aufnahmekammer mit einem Waschmittel;
g) gegebenenfalls Verschließen und Vereinzeln der befüllten Aufnahmebehälter unter Ausbildung der Waschmittelportionseinheit,
wobei
- die Oberfläche der Heizvorrichtung, welche mit dem wasserlöslichen Film in Kontakt gebracht wird, mindestens eine Erhebung aufweist und der wasserlösliche Film in Schritt b) mit der Oberfläche der Erhebung in Kontakt gebracht wird,
- der wasserlösliche Film in Schritt b) mit der Oberfläche der Erhebung nicht jedoch mit der weiteren Oberfläche der Heizvorrichtung in Kontakt gebracht wird und
- die Erhebung in Schritt b) mit dem Oberflächenanteil des wasserlöslichen Films in Kontakt steht, welcher in Schritt e) in die Kavität der Tiefziehmulde eingeformt wird.

Das erfindungsgemäße Verfahren ermöglicht die effiziente Herstellung der Waschmittelportionseinheiten. Die Waschmittelportionseinheiten zeichnen sich aufgrund einer gleichförmigen Dicke des wasserlöslichen Films durch eine hohe mechanische Stabilität bei geringem Verpackungsmitteleinsatz aus.

Im Rahmen des erfindungsgemäßen Verfahrens werden wasserlösliche Filme in einer Tiefziehapparatur umgeformt und mit Waschmittelzubereitungen zu Waschmittelportionseinheiten kombiniert.

Der wasserlösliche Film, in welche die Waschmittelzubereitung verpackt ist, kann ein oder mehrere strukturell verschiedene wasserlösliche(s) Polymer(e) umfassen. Als wasserlösliche(s) Polymer(e) für den ersten wasserlöslichen Film eignen sich insbesondere Polymere aus der Gruppe (gegebenenfalls acetalisierter) Polyvinylalkohole (PVAL) sowie deren Copolymere.

Wasserlösliche Folien zur Herstellung der wasserlöslichen Umhüllung basieren bevorzugt auf einem Polyvinylalkohol oder einem Polyvinylalkoholcopolymer, dessen Molekulargewicht im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt.

Die Herstellung der Polyvinylalkohol und Polyvinylalkoholcopolymere schließt in der Regel die Hydrolyse intermediären Polyvinylacetats ein. Bevorzugte Polyvinylalkohole und Polyvinylalkoholcopolymere weisen einen Hydrolysegrad 70 bis 100 Mol-%, vorzugsweise 80 bis 90 Mol-%, besonders bevorzugt 81 bis 89 Mol-% und insbesondere 82 bis 88 Mol-% auf.

Bevorzugte Polyvinylalkoholcopolymere umfassen neben Vinylalkohol eine ethylenisch ungesättigte Carbonsäure, deren Salz oder deren Ester. Besonders bevorzugt enthalten solche Polyvinylalkoholcopolymere neben Vinylalkohol Sulfonsäuren wie die 2-Acrylamido-2-methyl-1-propansulfonsäure (AMPS), Acrylsäure, Methacrylsäure, Acrylsäureester, Methacrylsäureester oder Mischungen daraus; unter den Estern sind C₁₋₄-Alkylester oder - Hydroxyalkylester bevorzugt. Als weitere Monomere kommen ethylenisch ungesättigte Dicarbonsäuren, beispielsweise Itaconsäure, Maleinsäure, Fumarsäure und Mischungen daraus in Betracht.

Geeignete wasserlösliche Folien zum Einsatz in den Umhüllungen der wasserlöslichen Verpackungen gemäß der Erfindung sind Folien, die von der Firma MonoSol LLC beispielsweise unter der Bezeichnung M8630, M8720, M8310, C8400 oder M8900 vertrieben werden. Andere geeignete Folien umfassen Folien mit der Bezeichnung Solublon^{®} PT, Solublon^{®} GA, Solublon^{®} KC oder Solublon^{®} KL von der Aicello Chemical Europe GmbH oder die Folien VF-HP von Kuraray sowie die Hi-Selon Serie der Mitsubishi Chemical Corporation.

Der erste wasserlösliche Film weist vorzugsweise eine Dicke von 10 bis 90µm, bevorzugt von 30 bis 60 µm auf.

Die wasserlöslichen Filme können als weitere Inhaltsstoffe zusätzliche Wirk- oder Füllstoffe aber auch Weichmacher und/oder Lösungsmittel, insbesondere Wasser, enthalten.

Zur Gruppe der weiteren Wirkstoffe zählen dabei beispielsweise Materialien, welche die von dem Filmmaterial umschlossenen Inhaltsstoffe des Waschmittels vor Zersetzung oder Desaktivierung durch Lichteinstrahlung schützen. Als besonders geeignet haben sich hier Antioxidantien, UV-Absorber und Fluoreszensfarbstoffe erwiesen.

Als Weichmacher können beispielsweise Glycerin, Ethylenglycol, Diethylenglycol, Propandiol, 2-Methyl-1,3-propandiol, Sorbit oder deren Gemische eingesetzt werden.

Zur Verminderung ihrer Reibungskoeffizienten kann die Oberfläche des wasserlöslichen Films der Waschmittelportionseinheit optional mit feinem Pulver abgepudert werden. Natriumaluminosilicat, Siliciumdioxid, Talk und Amylose sind Beispiele für geeignete Pudermittel.

Die in dem Verfahren eingesetzte Tiefziehapparatur kann kontinuierlich oder diskontinuierlich betrieben werden. Zur Erhöhung der Verfahrenseffizienz ist eine kontinuierliche Verfahrensweise bevorzugt. In einer besonders bevorzugten Ausführungsform des Verfahrens erfolgt der Transport des ersten wasserlöslichen Films in Schritt a) kontinuierlich. Im Hinblick auf die Verfahrensökonomie und Verfahrenssicherheit ist es bevorzugt, den ersten wasserlöslichen Film in Schritt a) mit einer Geschwindigkeit 0,04 m/s, vorzugsweise oberhalb 0,08 m/s zu transportieren.

Die Oberfläche der Heizvorrichtung mit welcher der wasserlösliche Film in Schritt b) in Kontakt gebracht wird, ist vorzugsweise plan. Besonders bevorzugte Materialien zur Fertigung der Oberfläche, mit welcher der wasserlösliche Film in Schritt b) in Kontakt steht sind Keramik oder Metall, insbesondere Stahl.

In einer bevorzugten Ausführungsform des Verfahrens weist die Heizvorrichtung in Schritt b) eine plane Oberfläche auf, aus welcher die mindestens eine Erhebung hervorragt.

Bevorzugte Erhebungen sind flächig ausgebildet. Besonders bevorzugt ist es, wenn die Erhebung eine plane Oberseite aufweist.

Die Höhe der Erhebung beträgt vorzugsweise 0,5 bis 5 mm, insbesondere 1 bis 3 mm.

Vorzugsweise sind 5 bis 50%, insbesondere 10 bis 35% der Fläche der Oberseite der Heizvorrichtung als Erhebung ausgebildet.

Die Oberfläche der Heizvorrichtung kann ein homogenes oder ein heterogenes Temperaturprofil aufweisen. Vorzugsweise beträgt die Heizrate der Heizvorrichtung 5 bis 70 K/s und insbesondere 10 bis 50 K/s.

Der wasserlösliche Film wird in Schritt b) mit der Heizvorrichtung in Kontakt gebracht und in Schritt e) unter Ausbildung eines Aufnahmebehälters mit mindestens einer Aufnahmekammer verformt. Einander benachbarte Abschnitte des wasserlöslichen Films bilden dabei den Boden oder die Seitenwände der Aufnahmekammer, oder den die Aufnahmekammer umgebenden Rand oder Steg und werden folglich in unterschiedlicher Weise gedehnt. Zur Angleichung der Dehnfaktoren der unterschiedlichen Abschnitte des den Aufnahmebehälter ausbildenden wasserlöslichen Films hat es sich insbesondere bei Einsatz von Polyvinylalkohol basierten Filmen als vorteilhaft erwiesen, wenn die Erhebung in Schritt b) mit dem Oberflächenanteil des wasserlöslichen Films in Kontakt steht, welcher in Schritt e) in die Kavität der Tiefziehmulde eingeformt wird. Der wasserlösliche Film wird in Schritt b) mit der Oberfläche der Erhebung nicht jedoch mit der weiteren Oberfläche der Heizvorrichtung in Kontakt gebracht.

In einer bevorzugten Verfahrensvariante wird der erste wasserlöslichen Film in Schritt b) nur an einer Seite mit der Heizvorrichtung in Kontakt gebracht. Im Vergleich zu Verfahren unter Einsatz von zwei Heizvorrichtungen ist das erfindungsgemäße Verfahren damit nicht nur mit einem geringeren apparativen Aufwand verbunden, es ermöglicht zudem ein kompakteres Design der Produktionsstraße.

Bevorzugt wird in Schritt b) die Oberseite des wasserlöslichen Films mit der Heizvorrichtung in Kontakt gebracht. Als Oberseite wird dabei die räumlich noch oben orientierte Seite des Films bezeichnet.

In einer bevorzugten Ausführungsform wird die Heizvorrichtung in Schritt b) in Richtung des wasserlöslichen Films abgesenkt.

Zur Verringerung der Prozessdauer und zur Sicherstellung eines reproduzierbaren Kontakts zwischen dem ersten wasserlöslichen Film und der Oberfläche der Heizvorrichtung wird der wasserlösliche Film in Schritt b) mittels eines Unterdrucks mit der Heizvorrichtung in Kontakt gebracht. Weiterhin ist es bevorzugt, den Kontakt zwischen dem wasserlöslichen Film und der Heizvorrichtung durch Beibehaltung eines Unterdrucks aufrecht zu erhalten. Die Höhe eines entsprechenden Unterdrucks, welcher in Schritt b) zwischen Heizvorrichtung und wasserlöslichem Film aufgebaut wird, beträgt vorzugsweise 200 bis 800 mBar und insbesondere 400 bis 700 mBar.

Zur Unterstützung der gleichmäßigen Ausbildung eines Unterdrucks zwischen Heizvorrichtung und wasserlöslichem Film weist die Oberfläche der Heizvorrichtung vorzugsweise Bohrungen auf, mittels derer zwischen Heizvorrichtung und Film befindliches Gas abgeführt werden kann. Diese Bohrungen befinden sich vorzugsweise zu 60%, bevorzugt zu 90%, insbesondere zu 95% und ganz besonders bevorzugt vollständig außerhalb der Erhebungen.

In Schritt c) wird der wasserlösliche Film vorzugsweise für einen Zeitraum von 0,5 bis 7 Sekunden, bevorzugt von 1 bis 6 Sekunden und insbesondere von 2 bis 5 Sekunden erwärmt.

Die Oberfläche der Heizvorrichtung weist vorzugswese eine Temperatur im Bereich von 23 bis 150°C, vorzugsweise von 80 bis 135°C auf. Besonders bevorzugt ist es, wenn die Oberfläche der Heizvorrichtung im Bereich der Erhebung(en) mit welchen der wasserlösliche Film in Schritt b) in Kontakt steht, eine Temperatur im Bereich von 90 bis 150°C, vorzugsweise von 110 bis 135°C aufweist.

Zur weiteren Angleichung der Dehnfaktoren der unterschiedlichen Abschnitte des den Aufnahmebehälter ausbildenden wasserlöslichen Films hat es sich weiterhin als vorteilhaft erwiesen, wenn die mindestens eine Erhebung in Schritt c) mit jedem Flächenabschnitten des wasserlöslichen Films in Berührung steht, welche den Randbereich der Aufnahmekammer(n) des Aufnahmebehälters bilden. Aus den gleichen Gründen ist es bevorzugt, dass die Flächenabschnitte des wasserlöslichen Films, welche den Bodenbereich der Aufnahmekammer(n) des Aufnahmebehälters bilden, in Schritt c) nicht mit der Heizvorrichtung in Berührung stehen.

Zur Steigerung der Verfahrenseffizienz hat es sich als konstruktiv vorteilhaft erwiesen, wenn sich der wasserlösliche Film in Schritt c) zwischen der Heizvorrichtung und der in Schritt e) eingesetzten Tiefziehmatrize befindet und der Abstand zwischen der Oberfläche der Heizvorrichtung und der Tiefziehmatrize weniger als 10 mm, vorzugsweise weniger als 5 mm und insbesondere zwischen 0,1 und 2 mm, besonders bevorzugt zwischen 0,2 und 1 mm beträgt.

In Schritt d) wird der Kontakt zwischen dem ersten wasserlöslichen Film und der Oberfläche der Heizvorrichtung aufgehoben. Hierzu wird der gegebenenfalls zwischen der Heizvorrichtung und dem wasserlöslichen Film wirkende Unterdruck beseitigt. In einer besonders bevorzugten Ausführungsform des Verfahrens wird in Schritt d) ein zuvor zwischen der Heizvorrichtung und dem wasserlöslichen Film erzeugter Unterdruck beseitigt und zeitgleich oder nachfolgend die Heizvorrichtung angehoben.

Der wasserlösliche Film weist zu Beginn von Schritt e) vorzugsweise eine Temperatur oberhalb seiner Glasübergangstemperatur auf.

In Schritt e) wird der wasserlösliche Film in die Kavität einer Tiefziehmatrize eingeformt. Hierzu wird vorzugsweise für die Dauer von 0,5 bis 7 Sekunden bevorzugt von 1 bis 5 Sekunden ein Unterdruck zwischen dem wasserlöslichen Film und der Tiefziehmatrize aufgebaut. Dieser zwischen dem wasserlöslichen Film und der Tiefziehmatrize erzeugte Unterdruck beträgt vorzugsweise 100 bis 600 mBar und insbesondere 200 bis 400 mBar.

Bei der Einformung in die Kavität der Tiefziehmatrize wird die Oberfläche des wasserlöslichen Films vorzugsweis um mindestens 80%, vorzugsweise um mindestens 120%, insbesondere um 120 bis 300% vergrößert. Gleichzeitig beträgt der maximale lokale Streckfaktor des wasserlöslichen Films im Anschluss an Schritt e) vorzugsweise 2 bis 4 und insbesondere 2 bis 3.

Bevorzugt ist es insbesondere, wenn der wasserlösliche Film in Schritt e) unter Ausbildung eines Aufnahmebehälters mit mindestens zwei, vorzugsweise mindestens drei und insbesondere mindestens vier Aufnahmekammern eingeformt wird.

Das Füllvolumen des Aufnahmebehälter in Schritt e) beträgt vorzugsweise Füllvolumen 1 bis 50 ml, bevorzugt 10 bis 40 ml und insbesondere 13 bis 25 ml.

In bevorzugten Verfahrensvarianten, bei denen der Aufnahmebehälter mindestens zwei, vorzugsweise mindestens drei und insbesondere mindestens vier Aufnahmekammern aufweist, beträgt das Verhältnis des Volumens der größten Aufnahmekammer zum Volumen der kleinsten Aufnahmekammer 4:1 bis 1:1, vorzugsweise 3:1 bis 1:1 beträgt.

Aus Gründen der Prozesseffizienz ist das erfindungsgemäße Verfahren derart ausgestaltet, dass in einem Verfahrensdurchlauf nicht lediglich eine einzige Waschmittelportionseinheit, sondern parallel eine Mehrzahl von Waschmittelportionseinheiten hergestellt wird. Vorzugsweise wird in Schritt e) ein Flächengebilde mit mindestens 14, vorzugsweise mindestens 20 Aufnahmebehältern ausgebildet.

In diesem Flächengebilde sind die Aufnahmebehälter vorzugsweise in Reihen angeordnet. Im Hinblick auf die nachfolgende Befüllung sind die in Schritt e) ausgebildeten Flächengebilde Reihen von Aufnahmebehältern auf welche orthogonal zur Transportrichtung des wasserlöslichen Films angeordnet sind.

In einer alternativen Ausführungsform wird in Schritt e) ein Flächengebilde ausgebildet, in welchem die Aufnahmebehälter in Reihen angeordnet sind, welche orthogonal zur Transportrichtung des wasserlöslichen Films verlaufen und zueinander jeweils um ein Drittel der Breite eines Aufnahmebehälters, vorzugsweise um die Hälfte der Breite eines Aufnahmebehälters versetzt sind.

In dem Flächengebilde sind die Aufnahmebehälter vorzugsweise derart angeordnet, dass jeder Aufnahmebehälter mindestens einem Zwischenbereich benachbart ist, welcher seinerseits von drei Aufnahmebehältern umgeben ist.

Die mindestens eine Aufnahmekammer des Aufnahmebehälters wird in Schritt f) befüllt. Zur Befüllung eignen sich feste und flüssige Wasch- oder Reinigungsmittel.

Insbesondere in Fällen, in denen die eingefüllten Wasch- oder Reinigungsmittel nicht haftend mit dem wasserlöslichen Filmmaterial verbunden sind, wie dies beispielsweise bei Schmelzen der Fall sein kann, wird die befüllte Aufnahmekammer des Aufnahmebehälters verschlossen. Entsprechende Verfahren, in deren Verlauf die Aufnahmekammer des Aufnahmebehälters in einem weiteren Schritt f) befüllt und die befüllte Aufnahmekammer in einem nachfolgenden Schritt g) mittels eines zweiten wasserlöslichen Films verschlossen wird, sind im Hinblick auf die Produktästhetik und -handhabbarkeit bevorzugt.

## Patentansprüche

1. Verfahren zur Herstellung einer Waschmittelportionseinheit mit mindestens einer von einem wasserlöslichen Film umgebenden befüllten Aufnahmekammer, umfassend die Schritte
a) Transport eines ersten wasserlöslichen Films in Richtung einer Heizvorrichtung;
b) In Kontakt bringen des ersten wasserlöslichen Films mit der Heizvorrichtung;
c) Erwärmen des ersten wasserlöslichen Films mittels der Heizvorrichtung;
d) Aufheben des Kontakts zwischen dem ersten wasserlöslichen Film und der Heizvorrichtung;
e) Einformen des ersten erwärmten wasserlöslichen Films in die Kavitäten einer unterhalb des ersten wasserlöslichen Films befindlichen Tiefziehmatrize unter Ausbildung eines Aufnahmebehälters mit mindestens einer Aufnahmekammer;
f) Befüllen der mindestens einen Aufnahmekammer mit einem Waschmittel;
g) gegebenenfalls Verschließen und Vereinzeln der befüllten Aufnahmebehälter unter Ausbildung der Waschmittelportionseinheit,
wobei
- die Oberfläche der Heizvorrichtung, welche mit dem wasserlöslichen Film in Kontakt gebracht wird, mindestens eine Erhebung aufweist und der wasserlösliche Film in Schritt b) mit der Oberfläche der Erhebung in Kontakt gebracht wird,
**dadurch gekennzeichnet, dass**
- der wasserlösliche Film in Schritt b) mit der Oberfläche der Erhebung nicht jedoch mit der weiteren Oberfläche der Heizvorrichtung in Kontakt gebracht wird und
- die Erhebung in Schritt b) mit dem Oberflächenanteil des wasserlöslichen Films in Kontakt steht, welcher in Schritt e) in die Kavität der Tiefziehmulde eingeformt wird.

2. Verfahren nach Anspruch 1, wobei die Heizvorrichtung in Schritt b) eine plane Oberfläche aufweist, aus welcher die mindestens eine Erhebung hervorragt.

3. Verfahren nach einem der vorherigen Ansprüche, wobei die Erhebung flächig ausgebildet ist.

4. Verfahren nach einem der vorherigen Ansprüche, wobei die Erhebung eine plane Oberseite aufweist.

5. Verfahren nach einem der vorherigen Ansprüche, wobei die Erhebung eine Höhe von 0,5 bis 5 mm, vorzugsweise von 1 bis 3 mm aufweist.

6. Verfahren nach einem der vorherigen Ansprüche, wobei 5 bis 50%, vorzugsweise 10 bis 35% der Fläche der Oberseite der Heizvorrichtung als Erhebung ausgebildet ist.

7. Verfahren nach einem der vorherigen Ansprüche, wobei die mindestens eine Erhebung in Schritt c) mit jedem Flächenabschnitten des wasserlöslichen Films in Berührung steht, welche den Randbereich der Aufnahmekammer(n) des Aufnahmebehälters bilden.

8. Verfahren nach einem der vorherigen Ansprüche, wobei der erste wasserlösliche Film in Schritt b) nur an einer Seite mit der Heizvorrichtung in Kontakt gebracht wird.

9. Verfahren nach einem der vorherigen Ansprüche, wobei der wasserlösliche Film in Schritt e) unter Ausbildung eines Aufnahmebehälters mit mindestens zwei, vorzugsweise mindestens drei und insbesondere mindestens vier Aufnahmekammern eingeformt wird.

10. Verfahren nach einem der vorherigen Ansprüche, wobei der Aufnahmebehälter mindestens zwei, vorzugsweise mindestens drei und insbesondere mindestens vier Aufnahmekammern aufweist und das Verhältnis des Volumens der größten Aufnahmekammer zum Volumen der kleinsten Aufnahmekammer 4:1 bis 1:1, vorzugsweise 3:1 bis 1:1 beträgt.

11. Verfahren nach einem der vorherigen Ansprüche, wobei in Schritt e) die Oberfläche des wasserlöslichen Films um mindestens 80%, vorzugsweise um mindestens 120%, insbesondere um 120 bis 300% vergrößert wird.

12. Verfahren nach einem der vorherigen Ansprüche, wobei der wasserlösliche Film im Anschluss an den Schritt e) einen maximalen lokalen Streckfaktor von 2 bis 4, vorzugsweise von 2 bis 3 aufweist.

13. Verfahren nach einem der vorherigen Ansprüche, wobei in Schritt e) ein Flächengebilde ausgebildet wird, in welchem die Aufnahmebehälter in Reihen angeordnet sind, welche orthogonal zur Transportrichtung des wasserlöslichen Films verlaufen und zueinander jeweils um ein Drittel der Breite eines Aufnahmebehälters, vorzugsweise um die Hälfte der Breite eines Aufnahmebehälters versetzt sind.

## Claims

1. A method for producing a detergent portion unit having at least one filled receiving chamber surrounded by a water-soluble film, comprising the steps of:
a) transporting a first water-soluble film in the direction of a heating device;
b) bringing the first water-soluble film into contact with the heating device;
c) heating the first water-soluble film by means of the heating device;
d) breaking the contact between the first water-soluble film and the heating device;
e) molding the first heated water-soluble film into the cavities of a deep-drawing die beneath the first water-soluble film to form a receiving container having at least one receiving chamber;
f) filling the at least one receiving chamber with a detergent;
g) optionally sealing and separating the filled receiving containers to form the detergent portion unit,
- the surface of the heating device that is brought into contact with the water-soluble film comprising at least one elevation, and the water-soluble film being brought into contact with the surface of the elevation in step b),
**characterized in that**
- the water-soluble film is brought into contact with the surface of the elevation in step b), but not with the further surface of the heating device, and
- the elevation in step b) is in contact with the surface portion of the water-soluble film that is molded into the cavity of the deep-drawing depression in step e).

2. The method according to claim 1, wherein the heating device in step b) comprises a planar surface from which the at least one elevation protrudes.

3. The method according to one of the preceding claims, wherein the elevation is formed flat.

4. The method according to one of the preceding claims, wherein the elevation comprises a planar upper side.

5. The method according to one of the preceding claims, wherein the elevation is 0.5 to 5 mm high, preferably 1 to 3 mm high.

6. The method according to one of the preceding claims, wherein 5 to 50%, preferably 10 to 35% of the surface of the upper side of the heating device is formed as an elevation.

7. The method according to one of the preceding claims, wherein the at least one elevation in step c) is in contact with each surface portion of the water-soluble film that forms the edge region of the receiving chamber(s) of the receiving container.

8. The method according to one of the preceding claims, wherein the first water-soluble film in step b) is brought into contact only on one side with the heating device.

9. The method according to one of the preceding claims, wherein the water-soluble film is molded in step e) to form a receiving container having at least two, preferably at least three, and in particular at least four, receiving chambers.

10. The method according to one of the preceding claims, wherein the receiving container comprises at least two, preferably at least three, and in particular at least four, receiving chambers, and the ratio of the volume of the largest receiving chamber to the volume of the smallest receiving chamber is 4:1 to 1:1, preferably 3:1 to 1:1.

11. The method according to one of the preceding points, wherein in step e), the surface of the water-soluble film is increased by at least 80%, preferably by at least 120%, in particular by 120 to 300%.

12. The method according to one of the preceding claims, wherein after step e), the water-soluble film has a maximum local stretching factor of 2 to 4, preferably of 2 to 3.

13. The method according to one of the preceding claims, wherein in step e), a two-dimensional structure is formed, in which the receiving containers are arranged in rows which run orthogonally to the transport direction of the water-soluble film and are respectively offset from one another by a third of the width of a receiving container, preferably by half of the width of a receiving container.

## Revendications

1. Procédé de fabrication d'une portion unitaire de détergent comportant au moins une chambre de réception remplie et entourée d'un film hydrosoluble, comprenant les étapes consistant à
a) transporter un premier film hydrosoluble en direction d'un dispositif de chauffage ;
b) mettre en contact le premier film hydrosoluble avec le dispositif de chauffage ;
c) chauffer le premier film hydrosoluble au moyen du dispositif de chauffage ;
d) annuler la mise en contact entre le premier film hydrosoluble et le dispositif de chauffage ;
e) mouler le premier film hydrosoluble chauffé dans les cavités d'une matrice d'emboutissage profond située en dessous du premier film hydrosoluble pour former un récipient de réception comportant au moins une chambre de réception ;
f) remplir l'au moins une chambre de réception d'un agent de lavage ;
g) éventuellement, fermer et séparer les récipients de réception remplis pour former la portion unitaire de détergent,
dans lequel
- la surface du dispositif de chauffage mise en contact avec le film hydrosoluble présente au moins une protubérance et, à l'étape b), le film hydrosoluble est mis en contact avec la surface de la protubérance,
**caractérisé en ce que**
- à l'étape b), le film hydrosoluble est mis en contact avec la surface de la protubérance, mais pas avec l'autre surface du dispositif de chauffage, et
- à l'étape b), la protubérance est en contact avec la partie de la surface du film hydrosoluble qui est moulée dans la cavité du moule d'emboutissage profond à l'étape e).

2. Procédé selon la revendication 1, dans lequel, à l'étape b), le dispositif de chauffage présente une surface plane depuis laquelle l'au moins une protubérance fait saillie.

3. Procédé selon l'une des revendications précédentes, dans lequel la protubérance est plane.

4. Procédé selon l'une des revendications précédentes, dans lequel la protubérance présente une face supérieure plane.

5. Procédé selon l'une des revendications précédentes, dans lequel la protubérance présente une hauteur allant de 0,5 à 5 mm, de préférence de 1 à 3 mm.

6. Procédé selon l'une des revendications précédentes, dans lequel 5 à 50 %, de préférence 10 à 35 % de la surface de la face supérieure du dispositif de chauffage est réalisée sous forme de protubérance.

7. Procédé selon l'une des revendications précédentes, dans lequel, à l'étape c), l'au moins une protubérance est en effleurement avec chaque section de surface du film hydrosoluble formant la zone de bord de la ou des chambres de réception du récipient de réception.

8. Procédé selon l'une des revendications précédentes, dans lequel, à l'étape b), le premier film hydrosoluble est mis en contact avec le dispositif de chauffage sur une seule face.

9. Procédé selon l'une des revendications précédentes, dans lequel, à l'étape e), le film hydrosoluble est moulé pour former un récipient de réception comportant au moins deux, de préférence au moins trois et en particulier au moins quatre, chambres de réception.

10. Procédé selon l'une des revendications précédentes, dans lequel le récipient de réception présente au moins deux, de préférence au moins trois et en particulier au moins quatre, chambres de réception et le rapport du volume de la plus grande chambre de réception au volume de la plus petite chambre de réception va de 4:1 à 1:1, de préférence de 3:1 à 1:1.

11. Procédé selon l'une des revendications précédentes, dans lequel, à l'étape e), la surface du film hydrosoluble est augmentée d'au moins 80 %, de préférence d'au moins 120 %, en particulier de 120 à 300 %.

12. Procédé selon l'une des revendications précédentes, dans lequel, à l'issue de l'étape e), le film hydrosoluble présente un facteur d'étirement local maximal allant de 2 à 4, de préférence de 2 à 3.

13. Procédé selon l'une des revendications précédentes, dans lequel, à l'étape e), une structure plane est réalisée, dans laquelle les récipients de réception sont disposés en rangées qui s'étendent de manière orthogonale à la direction de transport du film hydrosoluble et sont respectivement décalées les unes par rapport aux autres d'un tiers de la largeur d'un récipient de réception, de préférence de la moitié de la largeur d'un récipient de réception.
